# EUROPEAN PATENT SPECIFICATION

(11) **EP 0 339 779 B1**
(45) Date of publication and mention of the grant of the patent: **22.11.1995**
(21) Application number: 89302489.3
(22) Date of filing: 14.03.1989
(51) Int. Cl.: G01N 27/26

(54) **Automated capillary electrophoresis apparatus**
Automatische Vorrichtung für kapillare Elektrophorese
Appareil automatique d'électrophorèse capillaire

(30) Priority: 29.04.1988 US 188773
(43) Date of publication of application: 02.11.1989
(73) Proprietor: BECKMAN INSTRUMENTS, INC., Fullerton California 92634 (US)
(72) Inventor: Burolla, Victor Paul, Livermore California 92634 (US)
(74) Representative: Ede, Eric

(56) References cited:
- US-A- 3 238 115
- US-A- 3 956 099
- US-A- 4 124 470
- US-A- 4 375 401
- Anal. Chem. 60 (1988) 642-648; D.J. Rose et al.

## Description

This invention relates to capillary electrophoresis. More particularly, an apparatus is disclosed which automates capillary electrophoresis.

### BACKGROUND OF THE INVENTION

Capillary electrophoresis is known. An electrolyte filled capillary is injected with sample. The two distal ends of the sample are each emerged in separate electrolyte baths. Each electrolyte bath is communicated with differing electrode potential sufficient for electrophoresis to occur in the capillary.

Electrophoresis is easy to understand. Typically, differing components of a sample subjected to electrophoresis have differing size and differing electric charge. Dependent upon the size of the particles and their charge, a migration of constituents of a sample occurs along the length of a capillary when the capillary is subjected at its distal ends to differing electrical potentials. The discrete particle migration through the capillary is the sum of two effects.

First, and assuming that the capillary is filled with an electrolyte, an overall flow of electrolyte can and does occur due to the difference in electrical potential across the length of the capillary.

Second, and relative to any overall induced flow in the capillary, individual particles of sample will move relative to one another. This movement constitutes the sought after classification due to electrophoresis.

It will be understood that the electrolyte filling in the capillary can be a liquid subject to overall flow or a gel, which is not usually subject to overall flow.

Typically the sample is placed adjacent one end of a capillary. A detector is placed adjacent the opposite end of a capillary. In the migration of the discrete sample constituents relative to the fluid in the capillary, the discrete constituents each form themselves into discrete flowing "bands". These discrete flowing bands are the product of the electrophoresis that are observed to determine both quantity and quality of the sample.

An autosampler is disclosed in "Analytical Chemistry", Vol.60, No.7, April 1, 1988 pages 642-648 which allows the comparison of two sample introduction methods for capillary zone electrophoresis, electromigration and hydrodynamic flow. The apparatus comprises vials for holding sample of buffer solution, a capillary, conveyor means for moving the vials respectively into registry with the ends of the capillary and means for applying an elctropotential to effect electrophoresis. An unsupported length of capillary is fed through a position device which lowers the end of the capillary into a vial registered below the position device.

### Statement of the Problem

There is a need to automate electrophoresis. If the technique can be automated to the point where vials sealed with sample can be automatically subjected to electrophoresis on a basis that is substantially remote, the technique of classification by the electrophoresis can be given an expanded application in analytical techniques.

### SUMMARY OF THE INVENTION

According to one aspect of the present invention there is provided an automated electrophoresis apparatus comprising:
first and second vials(V) for holding sample (92) or electrolyte (91) fluids;
conveyor means (R₁, R₂) for moving said first and second vials respectively into registry with said ends of said capillary, and means for selectively bringing said first and second vials into fluid communication with said ends of said capillary;
means (E1, E2) for applying electropotential to effect electrophoretic separation within the capillary;
and characterised by an interchangeable capillary cartridge (C) including a length of capillary (Q) having two ends (70, 72) positioned respectively for achieving fluid communication with said first and second vials.

### Other Objects, Features and Advantages

An object of this invention is to disclose an apparatus and process for automated electrophoresis. Accordingly, at least two conveyors are loaded with vials. These vials are preferably septum sealed and registered to a cartridge containing a capillary. One vial on one conveyor is registered underneath a distal end of a capillary depending from a cartridge. The other vial on the other conveyor is registered beneath the opposite distal end of the capillary depending from the cartridge. The vials are thereafter moved vertically to pierce the septum, immerse the capillaries, in the fluid within the vials, and communicate electrodes to the fluid within the vials to effect automated electrophoresis.

A further object of this invention is to automate the injection of electrolyte, and sample to a capillary. According to this aspect, a series of vials are conveyed under one capillary end. A first vial is used to fill the capillary with electrolyte. A second vial is used to inject a small, precisely measured amount of sample. Once these injections have occurred, automated electrophoresis occurs.

An advantage of the disclosed apparatus is that electrophoresis can, for the most part, be automated. By the expedient of placing a series of vials in a conveyor, and appropriately programming the conveyor, sequential analysis of many samples can occur on an automated basis with minimal technician supervision.

A further advantage of the disclosed process is the disposition of a capillary in a cartridge. By the simple expedient of changing the cartridge, the size and length of the capillary can likewise readily be changed.

A further object to this invention is to disclose a preferred arrangement of the conveyor. Typically, two concentric and circular conveyors are provided. A first outer circular conveyor having in the order of 24 vials, supplies sequentially electrolyte, for charging the capillary, sample for injecting the capillary and electrolyte for providing electric charge to a depending distal ends of the capillary to cause electrophoresis. A second inner and circular conveyor having in the order of 10 vials supplies electrolyte for the required communication of electric charge for the electrophoresis. As a result, the conveyors, when suitably programmed, can sequentially register vials for a series of electrophoretic classifications, these classifications being essentially remote.

An advantage of this aspect of the invention is that the technician services needed for electrophoresis can be reduced to placing vials in the correct order on a conveyor. The sequential events after placement of the vials on the conveyor are all automated.

Yet an additional object of this invention is to utilize septum sealed vials for the electrophoresis. According to this aspect, all vials on the conveyors whether including electrolyte or sample are sealed by septums. These septum sealed vials are maneuvered and registered under a cartridge at a distal capillary end and then moved upwardly to effect contact with the capillary. Contact with the capillary is caused by impaling the vial at the septum on hypodermics to penetrate through the septum and form a conduit to the contents of the vials. Once penetration of the septums by the hypodermics has occurred, the hypodermics are threaded with capillaries or electrodes. The threading of the hypodermic with the capillary permits charging of the capillary with electrolyte, the injection of sample and the communication of the end of the capillary to the contents of the vial. The threading of the remaining hypodermic with an electrode permits the communication of electric charge to the contents interior of the vial.

An advantage of this aspect of the invention is that the fluid in the vials are sealed until the moment of their use in the electrophoretic process. Consequently, the process and apparatus here shown is uniquely compatible with laboratory diagnostic routines. Septum sealed samples can await analysis at the disclosed apparatus and be processed at the conveniance of laboratory personnel.

A further object to this invention is to illustrate in combination with the cartridge contained capillary, optical detector apparatus. According to this aspect of the invention, a light source with a conventional condenser light train is focused to a detector bath on the analytical apparatus. The disclosed cartridge has two cylindrical protrusions; a first protrusion is for leveling the cartridge, and a second protrusion, placed adjacent the detector aperture in the cartridge, is for registering the detector aperture precisely to the detector light train. By the expedient of providing a filter wheel in the optics, rotating the wheel for the optimum detection, examination of the classified bands in a specimen subject to electrophoretic classification can result.

An important advantage of this aspect of the invention is that most of the detector apparatus is confined to the complex instrumentation exterior of the cartridge. Consequently, the cartridge containing capillary is vastly simplified.

### BRIEF DESCRIPTION OF THE DRAWINGS

Other objects, features, and advantages of this invention will become more apparent after referring to the following specification and attached drawings in which:
Figs. 1A and 1B are side-by-side perspective views of the apparatus of this invention illustrating the two concentric rotating tables containing septum sealed vials underlying a capillary contained cartridge with the cartridge being communicated to a source of forced circulation coolant for capillary cooling and a light train for optical capillary detection illustrated;
Fig. 2 is a view of the septum piercing hypodermic apparatus, this view being sufficient to understand the mechanics of vial access; and
Fig. 3 is a side elevation illustrating the bottom of an overlying cartridge with two septum sealed vials each in their own conveyor being registered for access to their sealed contents;
Fig. 4A-4C are a cartoon-series illustrating in Fig. 4A cartridge contained capillary filled with electrolyte, in Fig. 4B the same cartridge contained capillary charged with sample and in Fig. 4C the capillary undergoing electrophoresis.

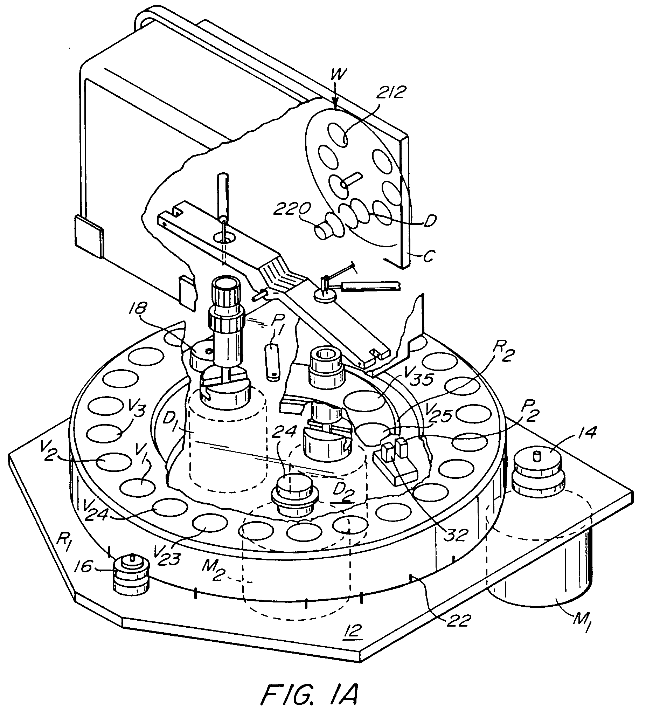

Referring to Fig. 1A a plate 12 has a first conveyor R1 rotatably mounted thereon between wheels 14, 16 and 18. Wheel 14 is rotatable with motor M1 and consequently causes the circular conveyor R1 to rotate as motor M1 turns wheel 14. A detector P1 observes notches 22 configured in conveyor R1. Precise positioning of the conveyor can be made.

Twenty-four vials V1-V24 are configured in the top of the conveyor R1. As will hereinafter be set forth, these vials are registered under a cartridge C at a depending capillary entrance. By having a plunger D1 cycle the vial holders upwardly and downwardly, sequential filling of the capillary with electrolyte, injection of measured amounts of sample, followed by electrophoresis can sequentially occur.

The operation of inner conveyor R2 is similar. Specifically a motor M2 drives a wheel 24 which along with other idler wheels (obscured from view) cause conveyor R2 to rotate. A position sensor P2 registers to grooves 32 in conveyor R2.

Conveyor R2 has vials V25 through V35 configured in the top thereof. By registering the vials V25 through V35 adjacent the detector aperture of a cartridge C, the automated electrophoresis herein can occur. Once registry has occurred, a plunger D2 manipulates the vial upwardly for the automated electrophoresis disclosure set forth herein.

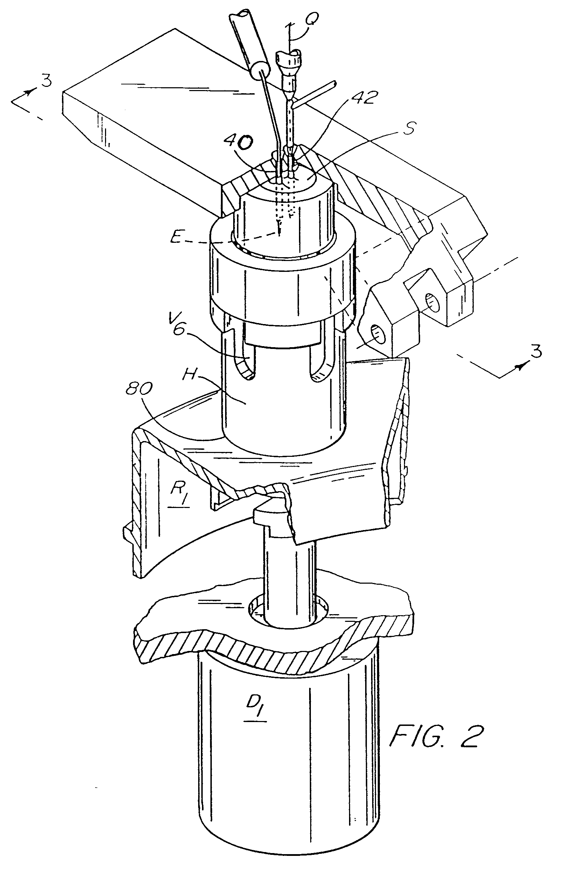

Referring to Fig. 2, it will be understood that conveyor R1 has caused an individual vial, in this case vial V6, to be conveyed in its respective holder H underlying a capillary Q. In this underlying position, plunger D1 grasping the bottom of the holder has moved holder H upwardly. Holder H and the vial V6 contained therein have been impaled upon two hypodermics. These hypodermics are hypodermic 40 containing an electrode E and hypodermic 42 threaded by the capillary Q.

The reader will understand that the same apparatus is repeated. Specifically, it repeats with respect to conveyor R2 and plunger D2.

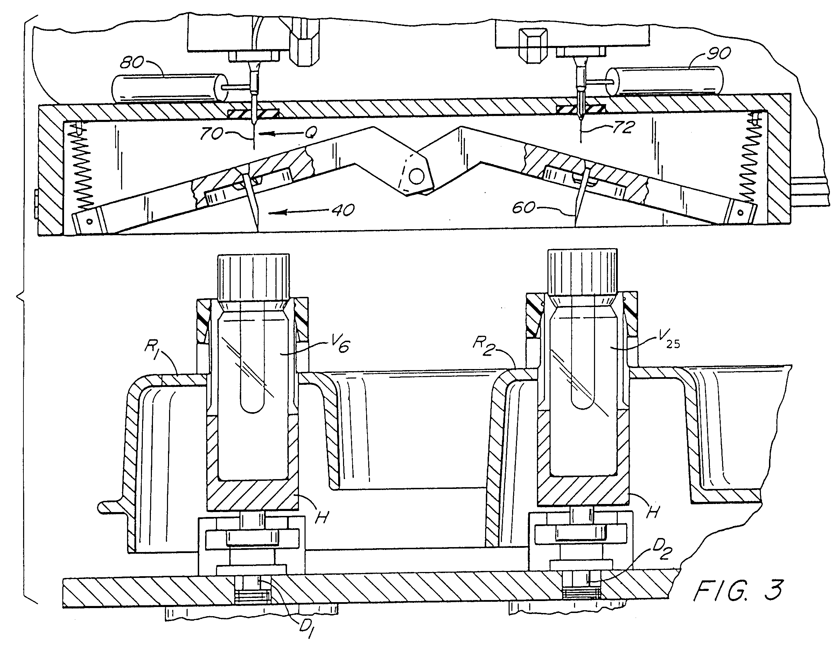

Referring to Fig. 3, the disclosed apparatus can be seen in section. Referring to Fig. 3, two holders H are illustrated with respect to conveyors R1 and R2. Conveyor R1 has caused vial V6 to be positioned underneath hypodermic apparatus (it being noted that the second hypodermic 42 is hidden from view). Similarly, conveyor R2 has positioned vial 25 underlying hypodermic 60, (it being noted that a second electrode is hidden from view).

Referring back to the view of Fig. 1A, it can be understood that each vial and hypodermic apparatus underlies an exit of a cartridge. Specifically, two depending capillary ends 70 and 72 depend downwardly.

Referring back to Fig. 2, it can be understood that as the septum S of each vial is pierced, the respective capillaries pierce the septum. Once piercing of the septum has occurred, the respective hypodermic are threaded. At each vial, threading of one occurs with capillary Q. At the other hypodermic, threading with an electrode E occurs.

Referring back to Fig. 3, it will be seen that hypodermic 40 communicates to a source of pressure in conduit 80. Likewise, hypodermic 60 communicates to a source of pressure 90. It will be understood that once registry of the holder H and piercing of the septum by the hypodermics 40, 42 occurs pressure communicated interior of vial V6 will cause flow in the capillary Q. This flow in the capillary Q will permit charging of capillary Q with electrolyte and thereafter charging of capillary Q with a measured amount of sample.

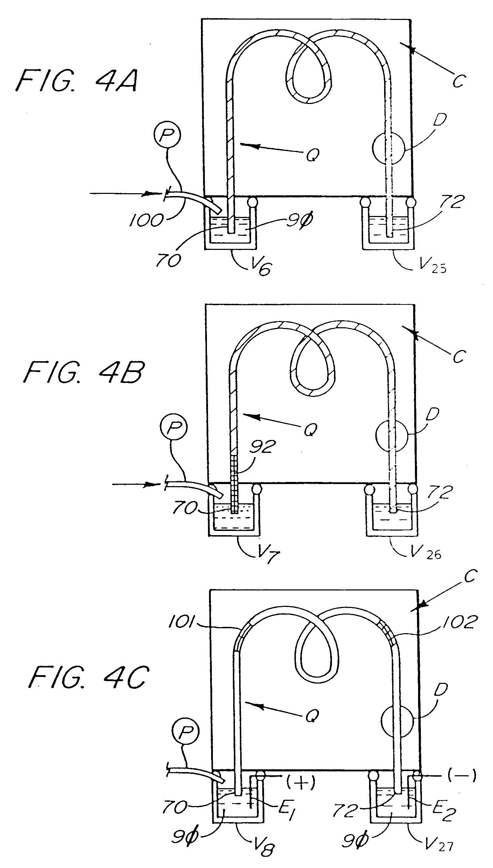

In order that this may be understood, the schematics of Figs. 4A, 4B and 4C will now be referred to.

Referring to Fig. 4A, a capillary Q contained in a cartridge C is illustrated. One distal end of capillary Q at 70 is disposed within vial V6. The opposite distal end 72 of the capillary Q is disposed within vial V25.

A conduit 100 supplies pressure to the interior of vial V6. Since capillary end 70 is below the level of electrolyte 91 contained within vial V6, the capillary Q fills with electrolyte. Filling occurs from end 70 to and towards end 72.

Referring to Fig. 4B, vial V6 has been replaced. It has been replaced by the conveyor mechanism with a new vial V7 containing sample. A vial V26 is communicated with end 72.

Again pressure is supplied to the interior of vial V7. The applied pressure forces the sample 92 into the beginning of the capillary.

Once sufficient sample 92 is injected at end 70 of capillary Q, replacement of the vials again occurs. A vial V8 filled with electrolyte is communicated with end 70 of capillary Q as shown in Fig. 4C. Likewise, a vial V27 is communicated with end 72.

In the schematic of Fig. 4C, electrodes are shown. Specifically, an electrode E1 is shown communicating a positive charge to vial V8 filled with electrolyte 91. Likewise, an electrode E2 is shown communicating electric current to the contents of vial V27 filled with electrolyte 91.

In Fig. 4C, an attempt has been made to show the resultant classification. Specifically, portions of the sample at 101 and 102 have preceded from the original location of the sample adjacent end 70 of capillary Q to that portion of the capillary Q adjacent end 72.

A detector aperture D is shown adjacent end 72 of capillary Q. This detector aperture will here be illustrated as being interrogated by light. The reader will understand that alternate methods of interrogation including the measurement of electrical resistance and the removal of sample for mass spectroscopy may as well be used.

Attention will now be directed to the light train L and its examination of the results of the electrophoresis.

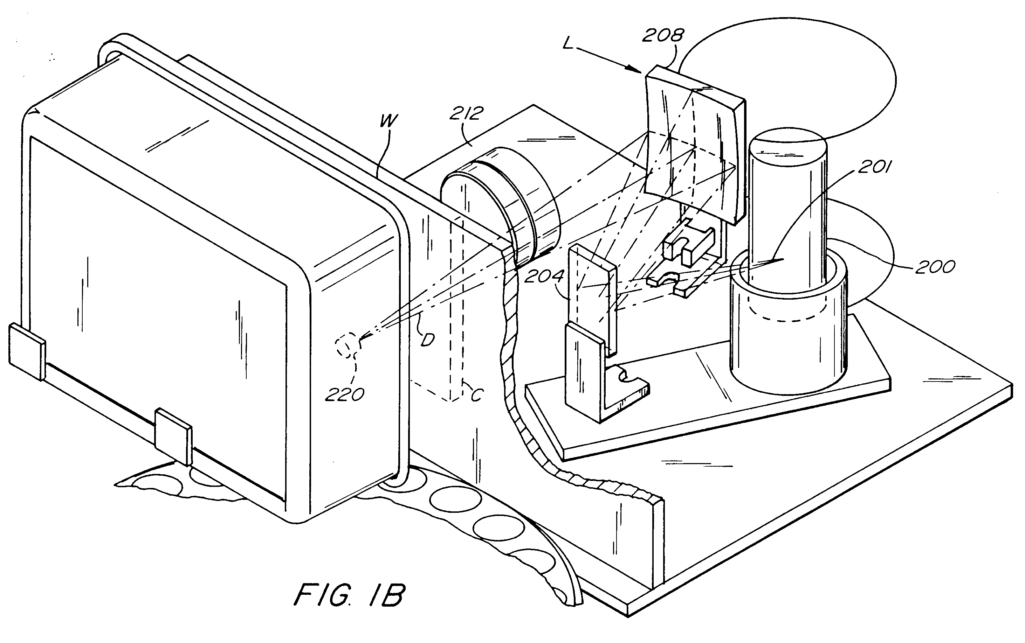

Referring to Fig. 1B, light train L can be observed. A light source 200 puts out a point source of light 201. Point source of light is incident upon a plane mirror 204 and a focusing spherical mirror 208. Focusing mirror 208 focuses the light at a wheel W.

Wheel W includes a series of filter colors 212. Colors 212 register to the cartridge C. At the detector aperture D light passes through the detector aperture D and onto photosensing equipment 220. It is at the photosensor that recordation of optical measurements can be made.

It will be appreciated that the disclosed instrument additionally includes the possibility of recording resistance as well as other measurements. Such other measurements, such as mass spectroscopy, can be accommodated by running the required electrophoresis in a cartridge C for a given period of time and thereafter removing the cartridge and extracting the concentrated sample bands.

This application has provided a summary of the combination of components illustrated resulting in the disclosed automated electrophoresis apparatus and process here shown.

## Claims

1. An automated electrophoresis apparatus comprising:
first and second vials (V) for holding sample (92) or electrolyte (91) fluids;
conveyor means (R₁, R₂) for moving said first and second vials respectively into registry with said ends of said capillary, and means for selectively bringing said first and second vials into fluid communication with said ends of said capillary;
means (E1, E2) for applying electropotential to effect electrophoretic separation within the capillary;
and characterised by an interchangeable capillary cartridge (C) including a length of capillary (Q) having two ends (70, 72) positioned respectively for achieving fluid communication with said first and second vials.

2. An apparatus as in claim 1 further comprising detection means (D) for detecting electrophoretically separated components moving through the capillary, wherein the cartridge has a structure which facilitates said detection of electrophoretically separated components.

3. An apparatus as in claim 2 wherein the detection means comprises means (200, 201, 204, 208, W, 220) for optically detecting electrophoretically separated components moving through a section of the capillary.

4. An apparatus as in any of the above claims wherein the cartridge has an aperture (D) exposing a section of the capillary.

5. An apparatus as in any of the above claims wherein the cartridge includes means structured and configured for facilitating cooling of the capillary.

6. An apparatus as in any one of the above claims wherein the cartridge has first and second exits through which the said ends of the capillary can communicate with the contents in the vials; and
the cartridge is supported in a manner allowing each end of the capillary to be in communication with one of the vials and allowing the cartridge to be easily detached for interchanging with another cartridge.

7. An apparatus as in claim 6 wherein the first and second ends of the capillary extend through the exits on the cartridge, and the conveyor means comprises a conveyor (R1) which holds and moves the first vial along a path below the first cartridge exit.

8. An apparatus as in claim 7 comprising an actuator means (D1) for moving said first vial toward said first cartridge exit such that the sample or electrolyte in said first vial is within reach of the end of the capillary extending through said first exit when said first vial is moved to a position below said first exit by the conveyor.

9. An apparatus as in claim 7 or 8 comprising another conveyor (R2) which holds and moves the second vial along a path below the second cartridge exit.

10. An apparatus as in claim 9 comprising another actuator means (D2) for moving the second vial toward said second cartridge exit such that the sample or electrolyte in said second vial is within reach of the end of the capillary extending through said second exit when said second vial is moved to a position below said second exit by said another conveyor.

## Patentansprüche

1. Automatisierte Elektrophorese-Apparatur umfassend
erste und zweite Phiolen bzw. Behältergefäße (V) zur Aufnahme von Probenflüssigkeit (92) oder Elektrolyt-Flüssigkeit (91);
Förder- bzw. Transport- bzw. Vorschubmittel (R₁, R₂) zur Verbringung der genannten ersten und zweiten Phiolen bzw. Behältergefäße in Ausrichtung mit den genannten Enden der genannten Kapillare, und Mittel zur selektiven Herstellung einer Strömungsverbindung der genannten ersten und zweiten Phiolen bzw. Behältergefäße mit den genannten Enden der genannten Kapillare;
Mittel (E1, E2) zum Anlegen eines Elektropotentials für die Durchführung der elektrophoretischen Trennung innerhalb der Kapillare;
und gekennzeichnet durch eine auswechselbare Kapillar-Kartusche (C), welche ein Stück Kapillare (Q) mit zwei Enden (70,72) enthält, die jeweils zur Herstellung einer Strömungsverbindung mit den genannten ersten und zweiten Phiolen bzw. Behältergefäßen positioniert sind.

2. Apparatur nach Anspruch 1, welche des weiteren Nachweismittel (D) zum Nachweis von durch die Kapillare wandernden elektrophoretisch getrennten Komponenten aufweist, wobei die Kartusche so konstruiert ist, daß sie den genannten Nachweis von elektrophoretisch getrennten Komponenten gestattet bzw. erleichtert.

3. Apparatur nach Anspruch 2, bei welcher die Nachweismittel Mittel (200, 201, 204, 208, W, 220) zum optischen Nachweis von durch einen Abschnitt der Kapillare wandernden elektrophoretisch getrennten Komponenten aufweist.

4. Apparatur nach einem der vorhergehenden Ansprüche, bei welcher die Kartusche eine einen Abschnitt der Kapillare freigebende Öffnung (D) besitzt.

5. Apparatur nach einem der vorhergehenden Ansprüche, bei welcher die Kartusche Mittel solcher Konstruktion und Anordnung aufweist, daß sie eine Kühlung der Kapillare gestatten.

6. Apparatur nach einem der vorhergehenden Ansprüche, bei welcher die Kartusche einen ersten und einen zweiten Austritt aufweist, durch welche hindurch die genannten Enden der Kapillare mit dem Inhalt in den Phiolen bzw. Behältergefäßen in Verbindung treten können; und bei welcher die Kartusche so gehaltert und angeordnet ist, daß jeweils jedes Ende der Kapillare in Verbindung mit einer der Phiolen stehen kann, und daß die Kartusche zur Auswechslung mit einer anderen Kartusche leicht abnehmbar ist.

7. Apparatur nach Anspruch 6, bei welcher das erste und das zweite Ende der Kapillare sich durch die Austritte der Kartusche hindurch erstrecken und bei welcher die Förder- bzw. Transportmittel eine Förder- bzw. Transport- bzw. Vorschubeinrichtung (R1) umfassen, welche die erste Phiole trägt und längs einem Pfad unterhalb des ersten Kartuschenausgangs verschiebt.

8. Apparatur nach Anspruch 7,
dadurch **gekennzeichnet**,
daß sie eine Betätigungsvorrichtung (D1) zur Verschiebung der genannten ersten Phiole in Richtung auf den genannten ersten Kartuschenausgang aufweist, derart daß die Probe oder der Elektrolyt in der genannten ersten Phiole sich in Reichweite des sich durch den genannten ersten Austritt erstreckenden Kapillarenendes befindet, wenn die genannte erste Phiole durch die Förder- bzw. Transportvorrichtung in eine Stellung unterhalb des genannten ersten Ausgangs verbracht ist.

9. Apparatur nach Anspruch 7 oder Anspruch 8,
dadurch **gekennzeichnet,**
daß sie eine weitere Förder- bzw. Transport- bzw. Vorschubeinrichtung (R2) aufweist, welche die zweite Phiole trägt und längs einem Vorschubweg unterhalb dem zweiten Kartuschenausgang verschiebt.

10. Apparatur nach Anspruch 9,
dadurch **gekennzeichnet,**
daß sie eine weitere Betätigungsvorrichtung (D2) zur Verstellung der zweiten Phiole in Richtung auf den genannten zweiten Kartuschenausgang aufweist, derart daß die Probe oder der Elektrolyt in der genannten zweiten Phiole sich in Reichweite des sich durch den genannten zweiten Austritt erstreckenden Kapillarendes befindet, wenn die genannte zweite Phiole durch die genannte andere Förder- bzw. Transport- bzw. Vorschubeinrichtung in eine Stellung unterhalb des genannten zweiten Austritts verbracht ist.

## Revendications

1. Appareil automatisé d'électrophorèse comprenant :
des première et seconde finies (V) pour contenir un échantillon (92) ou un électrolyte (91) fluides ;
un moyen convoyeur (R₁, R₂) pour déplacer lesdites première et seconde fioles, respectivement,en correspondance avec lesdites extrémités dudit capillaire et un moyen pour porter sélectivement lesdites première et seconde fioles en communication de fluide avec lesdites extrémités dudit capillaire ;
un moyen (E1, E2) pour appliquer un potentiel électrique pour effectuer la séparation électrophorétique dans le capillaire ;
et caractérisé par une cartouche de capillaire interchangeable (C) contenant une longueur de capillaire (Q) ayant deux extrémités(70, 72) qui sont placées respectivement pour obtenir une communication de fluide avec lesdites première et seconde fioles.

2. Appareil selon la revendication 1, comprenant de plus un moyen de détection (D) pour détecter les composants électrophorétiquement séparés passant à travers le capillaire, où la couche a une structure qui facilite ladite détection des composants électrophorétiquement séparés.

3. Appareil selon la revendication 2, caractérisé en ce que le moyen de détection comprend un moyen (200, 201, 204, 208, W, 220) pour détecter optiquement les composants électrophorétiquement séparés passant à travers une section du capillaire.

4. Appareil selon les revendications précédentes, où la cartouche a une ouverture (D) exposant une section du capillaire.

5. Appareil selon l'une quelconque des revendications précédentes, où la cartouche comporte un moyen structuré et configuré pour faciliter le refroidissement du capillaire.

6. Appareil selon l'une quelconque des revendications précédentes, où la cartouche a des première et seconde sorties par où lesdites extrémités du capillaire peuvent communiquer avec les contenus des fioles ; et
la cartouche est supportée d'une manière permettant à chaque extrémité du capillaire d'être en communication avec l'une des fioles et permettant à la cartouche d'être facilement détachée pour un échange avec une autre cartouche.

7. Appareil selon la revendication 6, où les première et seconde extrémités du capillaire s'étendent à travers les sorties de la cartouche et le moyen convoyeur comprend un convoyeur (R1) qui maintient et déplace la première fiole le long d'un trajet en dessous de la première sortie de la cartouche.

8. Appareil selon la revendication 7, comprenant un moyen d'actionnement (D1) pour déplacer ladite première fiole vers ladite première sortie de cartouche de manière que l'échantillon ou l'électrolyte dans ladite première fiole soit à portée de l'extrémité du capillaire s'étendant à travers ladite sortie quand ladite première fiole est déplacée à une position en dessous de ladite première sortie par le convoyeur.

9. Appareil selon la revendication 7 ou 8 comprenant un autre convoyeur (R2) qui maintient et déplace la seconde fiole le long d'un trajet en dessous de la seconde sortie de la cartouche.

10. Appareil selon la revendication 9, comprenant un autre moyen d actionnement (D2) pour déplacer la seconde fiole vers la seconde sortie de la cartouche de manière que l'échantillon ou l'électrolyte dans ladite seconde fiole soit à portée de l'extrémité du capillaire s'étendant à travers ladite seconde sortie quand ladite seconde fiole est déplacée à une position en dessous de ladite seconde sortie par ledit autre convoyeur.
